# EUROPEAN PATENT APPLICATION

(11) **EP 2 738 279 A1**
(43) Date of publication of application: **04.06.2014**
(21) Application number: 12820243.9
(22) Date of filing: 25.07.2012
(51) Int. Cl.: C22C 38/00, C22C 38/44, C22C 38/50, C23F 1/00, C23F 17/00, C23G 1/08, C25F 1/06, H01M 8/02, C23C 22/34, H01M 8/10

(54) **STAINLESS STEEL FOR FUEL CELL SEPARATOR**

(30) Priority: 29.07.2011 JP 2011166579
(71) Applicant: JFE Steel Corporation, Tokyo 100-0011 (JP)
(72) Inventor: MAKIISHI, Noriko, Tokyo 100-0011 (JP); NORO, Hisato, Tokyo 100-0011 (JP); ISHIKAWA, Shin, Tokyo 100-0011 (JP); IDE, Shinsuke, Tokyo 100-0011 (JP); ISHII, Tomohiro, Tokyo 100-0011 (JP); NAGOSHI, Masayasu, Tokyo 100-0011 (JP)
(74) Representative: Stebbing, Timothy Charles
(86) International application number: PCT/JP2012/004740
(87) International publication number: WO 2013/018322

(57) **Abstract**

Stainless steel for fuel cell separators are provided which exhibit stable contact resistance characteristics and excellent practical utility.

The stainless steel contains not less than 16 mass% of Cr. When the surface configuration of the stainless steel is analyzed with a scanning electron microscope at a spatial resolution of not more than 0.1 µm, the surface modulus is not less than 1.02. Preferably, the chemical composition further includes C: not more than 0.03%, Si: not more than 1.0%, Mn: not more than 1.0%, S: not more than 0.01%, P: not more than 0.05%, Al: not more than 0.20%, N: not more than 0.03%, Cr: 16 to 40%, and one or more of Ni: not more than 20%, Cu: not more than 0.6% and Mo: not more than 2.5%, the balance being Fe and inevitable impurities.

## Description

### Technical Field

The present invention relates to stainless steel for fuel cell separators which is excellent in corrosion resistance and in contact resistance characteristics.

### Background Art

From the viewpoint of environmental conservation, there has recently been ongoing development of fuel cells that are excellent in electric power generation efficiency and do not emit carbon dioxide. A fuel cell produces electricity by the reaction of hydrogen with oxygen. The basic structure thereof is a sandwich structure that is composed of an electrolyte membrane, namely, an ion-exchange membrane, two electrodes (a fuel electrode and an air electrode), hydrogen and oxygen (air) diffusion layers, and two separators. Fuel cells developed so far have some types in accordance with the electrolytes used such as phosphoric acid fuel cells, molten sodium carbonate fuel cells, solid oxide fuel cells, alkaline fuel cells and solid polymer fuel cells.

Of the above fuel cells, solid polymer fuel cells outperform other types of fuel cells such as molten sodium carbonate fuel cells and phosphoric acid fuel cells in terms of such characteristics as (1) a markedly low operating temperature of about 80°C, (2) reduced weight and size of cell bodies, and (3) a short transient time, high fuel efficiency and high output density. Thus, solid polymer fuel cells are one of the most attractive fuel cells today for use as power sources aboard electric vehicles as well as compact distributed power sources for home use and mobile use.

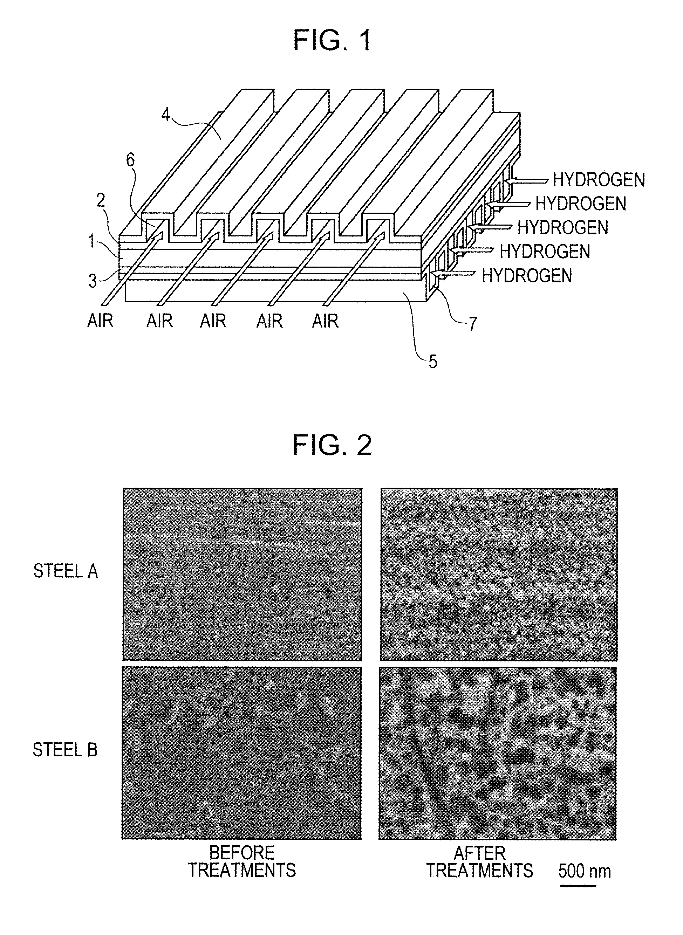

Solid polymer fuel cells are based on the principle of obtaining electricity from hydrogen and oxygen via polymer membranes. A structure thereof is illustrated in Fig. 1. A membrane-electrode assembly (MEA, having a thickness of several tens to several hundreds of µm) 1 is a combination of a polymer membrane and an electrode material such as carbon black carrying a platinum catalyst and disposed on the front and back sides of the membrane. This MEA is sandwiched between gas diffusion layers 2 and 3 such as carbon cloth sheets and separators 4 and 5, thereby forming a unit cell capable of generating an electromotive force between the separators 4 and 5. Here, the gas diffusion layers are frequently integrated with the MEA. When used, several tens to several hundreds of these unit cells are connected in series to form a fuel cell stack.

Separators are required to function as partitions separating unit cells and also as (1) conductors carrying electrons generated, (2) channels for oxygen (air) and hydrogen (air channels 6 and hydrogen channels 7 in Fig. 1), and (3) channels for water and exhaust gas (air channels 6 and hydrogen channels 7 in Fig. 1).

As described above, the practical use of solid polymer fuel cells requires separators which exhibit excellent durability and conductivity. Solid polymer fuel cells that are in practical use at present utilize separators made of carbonaceous materials such as graphite. Various other materials such as titanium alloys are under consideration. However, the carbon separators have drawbacks in that the separators are easily broken by impact, miniaturization is difficult, and the formation of channels incurs high processing costs. In particular, the cost problems are the greatest obstacle to the wide spreading of fuel cells. Thus, attempts have been made to replace carbonaceous materials by metal materials, in particular stainless steel.

Patent Literature 1 discloses a technique in which a metal that is easily passivated to form a passivation film is used as a separator. However, the formation of a passivation film results in an increase in contact resistance and leads to a decrease in electric power generation efficiency. Thus, problems with these metal materials have been indicated such as higher contact resistance and inferior corrosion resistance as compared to carbonaceous materials.

In order to solve these problems, Patent Literature 2 discloses a technique in which the surface of a metallic separator such as SUS304 is plated with gold to reduce contact resistance and ensure high output. However, thin gold plating is accompanied by a difficulty of preventing the occurrence of pinholes. On the other hand, thick gold plating adds costs.

Patent Literature 3 discloses a remedy in which separators with improved conductivity are obtained by dispersing carbon powders on ferritic stainless steel substrates. However, the use of carbon powders is a reasonably costly surface treatment for separators. Further, a problem has been pointed out in which such surface-treated separators markedly decrease corrosion resistance in the case where defects such as scratches are caused during assembling.

Under the circumstances described above, the present inventors have filed Patent Literature 4 drawn to a technique in which a stainless steel material is used as such and the surface configuration is controlled so as to satisfy both contact resistance and corrosion resistance. Patent Literature 4 is directed to a stainless steel sheet characterized in that the average spacing between local peak tops in a surface roughness curve is not more than 0.3 µm, this configuration achieving a contact resistance of not more than 20 mΩ·cm². Although this technique has made it possible to provide stainless steel materials as fuel cell separators materials, further improvements in contact resistance characteristics are desirable from the viewpoint of fuel cell design and a stable contact resistance of not more than 10 mΩ·cm² is demanded.

### Citation List

### Patent Literature

PTL 1: Japanese Unexamined Patent Application Publication No. 8-180883
PTL 2: Japanese Unexamined Patent Application Publication No. 10-228914
PTL 3: Japanese Unexamined Patent Application Publication No. 2000-277133
PTL 4: Japanese Unexamined Patent Application Publication No. 2005-302713

### Summary of Invention

### Technical Problem

The present invention has been made in view of the circumstances described above. It is therefore an object of the invention to provide stainless steel for fuel cell separators excellent in contact resistance characteristics and practical utility.

### Solution to Problem

The present inventors carried out extensive studies directed to improving the contact resistance characteristics of stainless steel for fuel cell separators. As a result, the present inventors have found that the contact resistance characteristics are improved by controlling the microscopic surface configuration. The present inventors have further found that controlling of the chemical composition is preferable from the viewpoints of ensuring practical corrosion resistance and mechanical characteristics of stainless steel as well as costs.

The present invention is based on the above findings. Features of the invention are as follows.
[1] A stainless steel for fuel cell separators wherein the stainless steel contains not less than 16 mass% of Cr and has a surface modulus of not less than 1.02, the surface modulus being obtained by a measurement of surface configuration with respect to the surface of the stainless steel with a scanning electron microscope at a spatial resolution of not more than 0.1 µm. Here, the surface modulus refers to a ratio of the area of irregular surface to the area of perfectly flat surface.
[2] The stainless steel for fuel cell separators described in [1], wherein the surface modulus is not less than 1.04.
[3] The stainless steel for fuel cell separators described in [1] or [2], wherein the stainless steel further contains, by mass, C: not more than 0.03%, Si: not more than 1.0%, Mn: not more than 1.0%, S: not more than 0.01%, P: not more than 0.05%, Al: not more than 0.20%, N: not more than 0.03%, Cr: 16 to 40%, and one or more of Ni: not more than 20%, Cu: not more than 0.6% and Mo: not more than 2.5%, the balance being Fe and inevitable impurities.
[4] The stainless steel for fuel cell separators described in any of [1] to [3], wherein the stainless steel further contains not more than 1.0% by mass of a total of one or more of Nb, Ti and Zr.

### Advantageous Effects of Invention

The stainless steel for fuel cell separators according to the present invention have stable contact resistance characteristics and excellent practical utility.

The inventive stainless steel as separators replace conventional expensive carbon and gold plating to enable the provision of inexpensive fuel cells and to promote the spread of fuel cells.

### Brief Description of Drawings

[Fig. 1] Fig. 1 is a schematic view illustrating a basic structure of a fuel cell.
[Fig. 2] Fig. 2 is a set of SEM (scanning electron microscope) images illustrating microscopic irregularities on the surface of samples according to the invention.
[Fig. 3] Fig. 3 illustrates a relationship between surface modulus measured by 3D (three-dimensional)-SEM and contact resistance of the surface of samples according to the invention.
[Fig. 4] Fig. 4 is a set of SEM images illustrating surface configurations of carbonaceous materials. Description of Embodiments

Hereinbelow, the present invention will be described in detail.

First, stainless steel of interest in the invention will be described.

The stainless steel used as the material in the invention is not particularly limited, and any types of steels may be used as long as the stainless steel has corrosion resistance required in an operating environment for fuel cells. However, the stainless steel needs to contain not less than 16 mass% Cr in order to ensure basic corrosion resistance. If the Cr content is less than 16 mass%, the stainless steel cannot endure prolonged use as separators. The Cr content is preferably not less than 18 mass%. If the Cr content exceeds 40 mass%, toughness may be lowered at times due to the precipitation of σ phase. Thus, the Cr content is preferably not more than 40 mass%.

A particularly preferred chemical composition is described below. The unit "%" used for the contents of components indicates mass% unless otherwise mentioned.

### C: not more than 0.03%

The reaction of carbon with chromium in stainless steel precipitates chromium carbide in the grain boundary, resulting in a decrease in corrosion resistance. Thus, a lower C content is more preferable. A marked decrease in corrosion resistance is avoided when the C content is not more than 0.03%. The C content is more preferably not more than 0.015%.

### Si: not more than 1.0%

Silicon is an effective element for deoxidation and is added at a stage of smelting of stainless steel. However, excessive addition causes hardening of the stainless steel sheet and decreases ductility. Thus, silicon, when added, is preferably present in a content of not more than 1.0%, and more preferably not less than 0.01% and not more than 0.6%.

### Mn: not more than 1.0%

Manganese combines to sulfur that has been inevitably mixed in the stainless steel and thereby effectively decreases the amount of sulfur dissolved in the stainless steel. Thus, this element is effective for suppressing the segregation of sulfur at the grain boundary and for preventing cracking of the steel sheet during hot rolling. However, adding manganese in excess of 1.0% does not substantially provide a corresponding increase in the effects. On the contrary, such excessive addition increases costs. Thus, the content of manganese, when present, is preferably not more than 1.0%.

### S: not more than 0.01%

Sulfur combines to manganese to form MnS and thereby lowers corrosion resistance. Thus, the content of this element is preferably small. A marked decrease in corrosion resistance is avoided when the S content is not more than 0.01%. Thus, the content of sulfur, when present, is preferably not more than 0.01%.

### P: not more than 0.05%

Phosphorus causes a decrease in ductility and therefore the content thereof is desirably small. A marked decrease in ductility is avoided when the P content is not more than 0.05%. Thus, the content of phosphorus, when present, is preferably not more than 0.05%.

### Al: not more than 0.20%

Aluminum is used as a deoxidizing element. Excessive addition of this element causes a decrease in ductility. Thus, the content of aluminum, when present, is preferably not more than 0.20%.

### N: not more than 0.03%

Nitrogen is an effective element for suppressing the localized corrosion such as crevice corrosion of stainless steel. However, the addition of nitrogen in excess of 0.03% requires long time at a stage of smelting of stainless steel, resulting in a decrease in productivity and a decrease in the formability of steel. Thus, nitrogen, when added, is preferably present in a content of not more than 0.03%.

One or more of Ni: not more than 20%, Cu: not more than 0.6% and Mo: not more than 2.5%

### Ni: not more than 20%

Nickel is an element that stabilizes the austenite phase and is added when austenitic stainless steel is to be produced. If the Ni content exceeds 20%, such excessive consumption of nickel increases costs. Thus, the Ni content is preferably not more than 20%.

### Cu: not more than 0.6%

Copper is an effective element for improving the corrosion resistance of stainless steel. However, the addition in excess of 0.6% not only results in a decrease in hot workability and a decrease in productivity but also increases costs due to excessive addition of copper. Thus, the content of copper, when added, is preferably not more than 0.6%.

### Mo: not more than 2.5%

Molybdenum is an effective element for suppressing the crevice corrosion of stainless steel. However, the addition in excess of 2.5% not only results in marked embrittlement of stainless steel and a decrease in productivity but also increases costs due to excessive consumption of molybdenum. Thus, the content of molybdenum, when added, is preferably not more than 2.5%.

### One or more of Nb, Ti and Zr in total of not more than 1.0%

In the invention, one or more of niobium, titanium and zirconium may be added in addition to the aforementioned elements in order to improve grain boundary corrosion resistance. However, ductility is lowered if the total thereof exceeds 1.0%. Because of this as well as in order to avoid an increase in costs due to the addition of these elements, titanium, niobium and zirconium, when added, are preferably present in a total content of not more than 1.0%.

The balance is iron and inevitable impurities.

Next, there will be described characteristics to be met by the inventive stainless steel for separators.

The stainless steel of the invention has a surface modulus of not less than 1.02, and preferably not less than 1.04. The surface modulus is obtained by a measurement of surface configuration with respect to the surface with a scanning electron microscope at a spatial resolution of not more than 0.1 µm.

Fig. 2 is a set of SEM images illustrating the results of SEM observation with respect to 1 µm or finer microscopic surface configurations of a steel sheet A and a steel sheet B with at least x10000 magnification. The steel A represents an example of ferritic material, and the steel B represents an example of austenitic material. The steels A and B are both stainless steel obtained by hot rolling, subsequent annealing at temperatures of 800 to 1100°C, and repeated cold rolling and annealing. In Fig. 2, the images before treatments indicate the steels as annealed, and the images after treatments show the steels that have been electrolytically treated in a 3% sulfuric acid solution at 55°C and thereafter immersed in a hydrofluoric acid solution after being annealed.

From Fig. 2, it is apparent that the microscopic irregularities on the surface of the steels A and B became significantly finer and numerous after the treatments compared to before the treatments.

Separately, the contact resistances of the surface of the steels A and B were measured before and after the treatments. The contact resistances of the steels A and B were both not less than 100 mΩ·cm² before the treatments, but were both reduced to not more than 10 mΩ·cm² after the treatments. In the measurement of contact resistance, carbon paper CP120 manufactured by TORAY INDUSTRIES, INC. was used, and the resistance at the interface of the carbon paper CP120 and the steel A or B in contact with each other under a load of 20 kGf/cm² was measured.

Next, in order to quantify the microscopic irregularities shown in Fig. 2, the surface moduli were obtained using a 3D-SEM fitted with a field-emission electron gun. The surface modulus is a ratio of the area of irregular surface to the area of perfectly flat surface. The surface moduli were determined in the following manner. SEM data was obtained by analyzing the thinly Au-deposited surface at an accelerating voltage of 5 kV. From the obtained 3D-SEM images, the surface modulus was calculated according to the equation: surface modulus = (1 + Sdr/100) wherein Sdr was the developed interfacial area ratio which was one of the 3D parameters. To eliminate influences of grain boundaries, at least three fields of view of regions free of crystal grain boundaries were analyzed with x20000 magnification, the results being averaged to give the surface modulus.

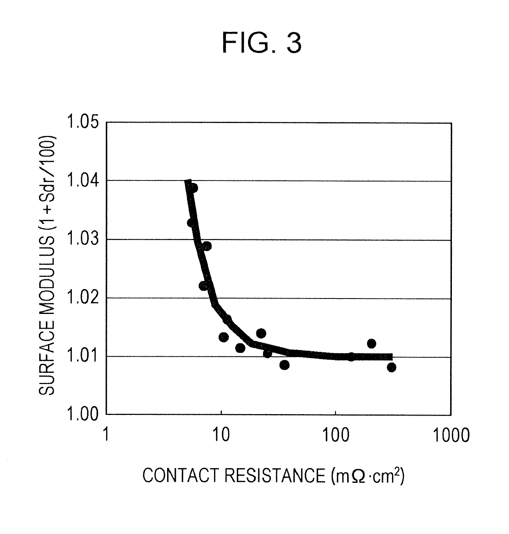

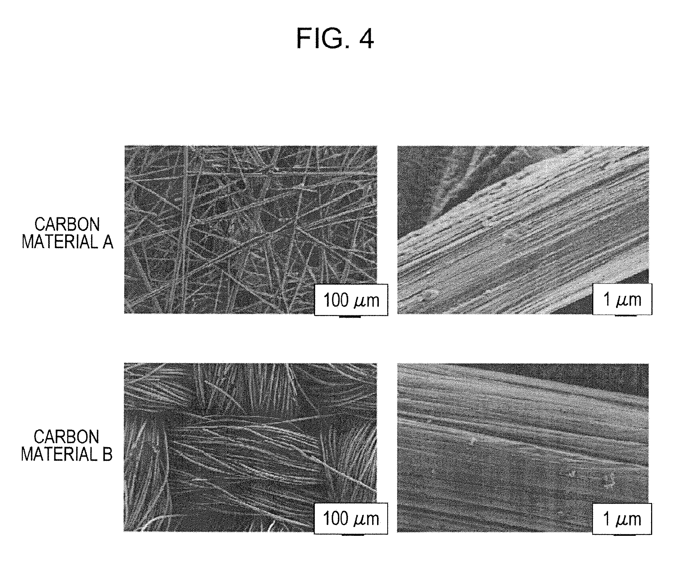

The measurement resulted in surface moduli of the steels A and B before and after the treatments ranging from 1.01 to 1.05. As illustrated in Fig. 3, it has been found that the contact resistance tends to be lower with increasing surface modulus. The reason for this tendency is considered to be as follows. Fig. 4 illustrates surface SEM images of carbonaceous materials, namely, carbon paper and carbon cloth. These carbonaceous materials contact stainless steel sheets via dispersed carbon fibers having a diameter of about 10 µm. In order to ensure conductivity at contacts, a pressure needs to be applied to the contact points. The present inventors assume that a larger number of microscopic irregularities, that is, a higher surface modulus provides a larger number of contact points at which a high pressure for establishing contacts can be easily obtained, thus achieving a further decrease in contact resistance. Thus, the reason for the above tendency is probably because the inventive configuration produces an effect of increasing the contact area. From Fig. 3, a contact resistance of not more than 10 mΩ·cm² is achieved by controlling the surface modulus to be not less than 1.02. A surface modulus of not less than 1.04 is shown to provide a still lower contact resistance.

Based on the above results, the present invention provides that when the surface configuration of the stainless steel is analyzed with a scanning electron microscope at a spatial resolution of not more than 0.1 µm, the surface modulus is not less than 1.02, and preferably not less than 1.04. The surface modulus may be regulated to fall in the inventive range by controlling treatment conditions such as by changing the treatment time and the temperature of the treatment liquid when the annealed steel is electrolytically treated in an acidic solution and is thereafter immersed in an acidic solution. To obtain a higher surface modulus, a higher temperature and a longer time are advantageous.

The measurement of surface modulus is not particularly limited. For example, the surface modulus may be obtained using a 3D-SEM fitted with a field-emission electron gun. For example, other devices such as an atomic force microscope may be utilized. Contact roughness meters are incapable of this irregularity evaluation because the diameter of the probe tip is on the order of micrometers. It is also possible to evaluate with a cross-sectional TEM (transmission electron microscope). However, a 3D-SEM is considered to be most suited to obtain representativeness from the evaluation of many fields of view.

The stainless steel for fuel cell separators having stable contact resistance characteristics and excellent practical utility may be produced by any conventional methods without limitation. Preferred production conditions are described below.

A slab conditioned to have a preferred chemical composition is heated to a temperature of not less than 1100°C, thereafter hot rolled, annealed at temperatures of 800 to 1100°C, and subsequently subjected to cycles of cold rolling and annealing to give a stainless steel. The sheet thickness of the obtained stainless steel sheet is suitably about 0.02 to 0.8 mm. After finish annealing, the steel sheet is preferably subjected to electrolytic treatment and acidizing. As an example of electrolytic conditions, the electrolytic treatment may be performed in a 3% sulfuric acid (H₂SO₄) bath at 2 A/dm² and 55°C for 30 seconds. As an example of the acidizing, the steel sheet may be immersed in a HCl:H₂O = 1:3 (by volume) liquid mixture at 50°C for 30 seconds.

### EXAMPLE 1

Steels having a chemical composition described in Table 1 were smelted in a vacuum melting furnace. The obtained steel ingots were heated to 1200°C and were then hot rolled to give hot rolled sheets with a sheet thickness of 5 mm. The hot rolled sheets were annealed at 900°C, descaled by pickling, and subjected to cycles of cold rolling, annealing and pickling. Thus, stainless steel sheets with a sheet thickness of 0.2 mm were produced.

Subsequently, the steel sheets were annealed, pretreated (by electrolytic treatment or pickling) under conditions described in Table 2, and acidized by being immersed in a pickling solution. The electrolytic treatment was carried out in a bath described in Table 2 at a solution temperature of 55°C and a current density of 2 A/dm² for a treatment time of 30 seconds. The pickling was performed with a solution described in Table 2 at a solution temperature of 55°C for a treatment time of 30 seconds. The acidizing was carried out in a solution at a bath temperature described in Table 2 for 120 seconds.

The stainless steels obtained above were tested to measure the contact resistance and were analyzed by 3D-SEM to determine the configuration and to evaluate the surface modulus.

In the measurement of contact resistance, carbon paper CP120 manufactured by TORAY INDUSTRIES, INC. was used, and the resistance at the interface of the carbon paper CP120 and the steel in contact with each other under a load of 20 kGf/cm² was measured.

The 3D-SEM measurement was performed with ERA-8800FE manufactured by Elionix at an accelerating voltage of 5 kV. The Elionix's ERA-8800FE was equipped with four secondary electron detectors directed to the sample direction and was capable of displaying images emphasizing differences in chemical compositions as well as images reflecting irregularities in a specific direction based on additive signals and subtractive signals of secondary electrons.

The obtained SEM images were processed with an attached image processing software (three-dimensional surface configuration analysis software "SUMMIT"), and the surface modulus was calculated according to the equation: surface modulus = (1 + Sdr/100). In the measurement, a 6 µm × 4.5 µm region was divided into pixels with 0.01 µm intervals. In the image processing, calculations were made while performing 1/2λ second-order Gaussian highpass filtering. At least five fields of view of each sample were observed, the results being averaged. Images including grain boundaries were excluded because the unevenness at the grain boundaries would greatly affect the results. That is, the calculations involved data obtained within grains.

The results are described in Table 3.

**[Table 1]**

| Steel No. | Components (mass%) | | | | | | | | | | | | | Remarks |
|---|---|---|---|---|---|---|---|---|---|---|---|---|---|---|
| | C | N | Si | Mn | P | S | Cr | Ni | Mo | Cu | Nb | Al | Ti | |
| 1 | 0.0083 | 0.0051 | 0.18 | 0.20 | 0.026 | 0.002 | 29.5 | - | 1.96 | - | 0.11 | 0.01 | 0.12 | Inv. Ex. |
| 2 | 0.0079 | 0.0049 | 0.17 | 0.25 | 0.015 | 0.001 | 21.1 | - | - | 0.49 | - | 0.03 | 0.32 | Inv. Ex. |
| 3 | 0.0081 | 0.0043 | 0.22 | 0.45 | 0.025 | 0.003 | 18.1 | 8.2 | - | - | - | 0.05 | | Inv. Ex. |

[Table 2]

**Table 2**

| Conditions | Pretreatment | | Acidizing | |
|---|---|---|---|---|
| | Electrolytic treatment | Pickling | Bath | Temperature |
| A | Conditions X1 | - | Conditions Z1 | 55°C |
| B | Conditions X2 | - | Conditions Z1 | 55°C |
| C | Conditions X2 | - | Conditions Z2 | 55°C |
| D | Conditions X2 | - | Conditions Z2 | 45°C |
| E | Conditions X2 | - | Conditions Z3 | 55°C |
| F | - | Conditions Y1 | Conditions Z2 | 55°C |
| G | - | - | Conditions Z2 | 55°C |
| H | Conditions X1 | - | - | - |

| | | | | |
|---|---|---|---|---|
| Conditions X1: electrolytic treatment in 3% H₂SO₄ bath Conditions X2: electrolytic treatment in 15% Na₂SO₄ bath Conditions Y1: pickling with HCl(1+3) Conditions Z1: HN03 10%+HF3% Conditions Z2: HF10% Conditions Z3: HF11% + HN03 10% | | | | |

[Table 3]

**Table 3**

| Test No. | Steel No. | Treatment | Surface modulus | | Contact resistance (mΩ·cm²) | Remarks |
|---|---|---|---|---|---|---|
| | | | Not less than 1.02 | Not less than 1.04 | | |
| 1 | 1 | A | ○ | ○ | 5.9 | Inv. Ex. |
| 2 | 1 | B | × | × | 11.3 | Comp. Ex. |
| 3 | 1 | C | ○ | × | 9.9 | Inv. Ex. |
| 4 | 1 | D | × | × | 37.6 | Comp. Ex. |
| 5 | 1 | E | × | × | 23.4 | Comp. Ex. |
| 6 | 1 | G | × | × | 15.3 | Comp. Ex. |
| 7 | 1 | - | × | × | 136.5 | Comp. Ex. |
| 8 | 2 | A | ○ | × | 9.5 | Inv. Ex. |
| 9 | 2 | B | ○ | ○ | 4.5 | Inv. Ex. |
| 10 | 2 | C | ○ | ○ | 5.6 | Inv. Ex. |
| 11 | 2 | D | ○ | × | 8.9 | Inv. Ex. |
| 12 | 2 | E | × | × | 11.3 | Comp. Ex. |
| 13 | 2 | F | ○ | × | 9.7 | Inv. Ex. |
| 14 | 2 | G | × | × | 12.1 | Comp. Ex. |
| 15 | 2 | H | × | × | 156.0 | Comp. Ex. |
| 16 | 2 | - | × | × | 206.0 | Comp. Ex. |
| 17 | 3 | B | ○ | × | 9.3 | Inv. Ex. |
| 18 | 3 | C | ○ | ○ | 5.7 | Inv. Ex. |
| 19 | 3 | D | ○ | × | 8.8 | Inv. Ex. |
| 20 | 3 | E | × | × | 34.0 | Comp. Ex. |
| 21 | 3 | F | ○ | × | 8.9 | Inv. Ex. |
| 22 | 3 | G | ○ | × | 9.6 | Inv. Ex. |
| 23 | 3 | H | × | × | 154.7 | Comp. Ex. |
| 24 | 3 | - | × | × | 306.7 | Comp. Ex |

From Table 3, it has been demonstrated that Inventive Examples in which the surface modulus was not less than 1.02 achieved a contact resistance of not more than 10 mΩ·cm². Further, many of the steel sheets with a surface modulus of not less than 1.04 exhibited a contact resistance of not more than 8 mΩ·cm² and were shown to be further enhanced in terms of contact resistance characteristics.

### EXAMPLE 2

Of the 0.2 mm thick stainless steel sheets used in EXAMPLE 1, the sheets of the steels Nos. 2 and 3 described in Table 1 were utilized. As a pretreatment, the steel sheets were electrolytically treated in a 3% sulfuric acid solution. The solution temperature was 55°C, the current density was 2 A/dm², and the treatment time was 30 seconds. The steel sheets were then acidized by being immersed in a solution mixture of 5% hydrofluoric acid and 1% nitric acid for the steel No. 2 and in a 5% hydrofluoric acid solution for the steel No. 3. The temperature of both the acid solutions was 55°C, and the immersion time was 40 seconds to 120 seconds. For comparison, samples were prepared without acid immersion. The surface of the obtained samples was tested to measure the contact resistance and was analyzed by 3D-SEM to determine the configuration and to evaluate the surface modulus. These measurements and data analysis were carried out by the same methods as in EXAMPLE 1.

The results are described in Table 4.

**[Table 4]**

| Test No. | Steel No. | Electrolytic treatment | Immersion time | Surface modulus | Contact resistance (mΩ·cm²) | Remarks |
|---|---|---|---|---|---|---|
| 25 | 2 | Performed | - | 1.012 | 15.0 | Comp. Ex. |
| 26 | 2 | Performed | 40 | 1.014 | 11.4 | Comp. Ex. |
| 27 | 2 | Performed | 60 | 1.056 | 4.7 | Inv. Ex. |
| 28 | 2 | Performed | 120 | 1.049 | 5.2 | Inv. Ex. |
| 29 | 3 | Performed | - | 1.010 | 44.0 | Comp. Ex. |
| 30 | 3 | Performed | 40 | 1.014 | 13.0 | Comp. Ex. |
| 31 | 3 | Performed | 60 | 1.023 | 8.2 | Inv. Ex. |
| 32 | 3 | Performed | 120 | 1.045 | 4.1 | Inv. Ex. |

Under the conditions adopted in this EXAMPLE, a surface modulus of not less than 1.02 was obtained when the acid immersion time was 60 seconds or more, resulting in a contact resistance of not more than 10 mΩ·cm². The steel No. 2 treated under these immersion conditions attained a surface modulus of not less than 1.04 and a contact resistance of not more than 8 mΩ·cm². On the other hand, the steel No. 3 achieved a surface modulus of not less than 1.04 and a contact resistance of not more than 8 mΩ·cm² when immersed in the acid for 120 seconds.

As demonstrated above, stainless steel for fuel cell separators exhibiting excellent contact resistance characteristics are realized by configuring the stainless steel such that when the surface configuration is analyzed with a scanning electron microscope at a spatial resolution of not more than 0.1 µm, the surface modulus is not less than 1.02, and preferably not less than 1.04.

### Reference Signs List

- 1: MEMBRANE-ELECTRODE ASSEMBLY
- 2: GAS DIFFUSION LAYER
- 3: GAS DIFFUSION LAYER
- 4: SEPARATOR
- 5: SEPARATOR
- 6: AIR CHANNEL
- 7: HYDROGEN CHANNEL

## Claims

1. A stainless steel for fuel cell separators, wherein
the stainless steel contains not less than 16 mass% of Cr and has a surface modulus of not less than 1.02, the surface modulus being obtained by a measurement of surface configuration with respect to the surface of the stainless steel with a scanning electron microscope at a spatial resolution of not more than 0.1 µm.

2. The stainless steel for fuel cell separators according to claim 1, wherein the surface modulus is not less than 1.04.

3. The stainless steel for fuel cell separators according to claim 1 or 2, wherein the stainless steel further contains, by mass, C: not more than 0.03%, Si: not more than 1.0%, Mn: not more than 1.0%, S: not more than 0.01%, P: not more than 0.05%, Al: not more than 0.20%, N: not more than 0.03%, Cr: 16 to 40%, and one or more of Ni: not more than 20%, Cu: not more than 0.6% and Mo: not more than 2.5%, the balance being Fe and inevitable impurities.

4. The stainless steel for fuel cell separators according to claim 1, wherein the stainless steel further contains not more than 1.0% by mass of a total of one or more of Nb, Ti and Zr.

5. The stainless steel for fuel cell separators according to claim 2, wherein the stainless steel further contains not more than 1.0% by mass of a total of one or more of Nb, Ti and Zr.

6. The stainless steel for fuel cell separators according to claim 3, wherein the stainless steel further contains not more than 1.0% by mass of a total of one or more of Nb, Ti and Zr.
